# EUROPÄISCHE PATENTSCHRIFT

(11) **EP 1 069 412 B1**
(45) Veröffentlichungstag und Bekanntmachung des Hinweises auf die Patenterteilung: **13.09.2006**
(21) Anmeldenummer: 00114642.2
(22) Anmeldetag: 07.07.2000
(51) Int. Cl.: G01G 19/12, G01G 19/08

(54) **Wägeeinrichtung zum Verwiegen von Gütern auf Fahrzeugen**
Weighing apparatus for weighing of goods on vehicles
Appareil de pesage pour peser des objets sur des véhicules

(30) Priorität: 07.07.1999 DE 19931381
(43) Veröffentlichungstag der Anmeldung: 17.01.2001
(73) Patentinhaber: Gerlach, Hans-Joachim, 64739 Höchst-Hassenroth (DE); Will, Heinz Ronald, 64665 Alsbach-Hähnlein (DE)
(72) Erfinder: Gerlach, Hans-Joachim, 64739 Höchst-Hassenroth (DE); Will, Heinz Ronald, 64665 Alsbach-Hähnlein (DE)
(74) Vertreter: Behrens, Helmut

(56) Entgegenhaltungen:
- EP-A- 0 054 000
- EP-A- 0 476 778
- EP-A- 0 513 463
- EP-A- 0 611 957
- NL-A- 9 101 201

## Beschreibung

Die Erfindung betrifft eine Wägeeinrichtung zum Verwiegen von Gütern auf Fahrzeugen, insbesondere auf Aufbauteilen bei Straßenfahrzeugen gemäß dem Oberbegriff des Patentanspruchs 1.

Die genaue Messung von zugeladenen Gütern auf Lastkraftwagen und anderen Fahrzeugen wird meist mit stationären Fahrzeugwaagen ermittelt. Dazu muß das gesamte Fahrzeug bei Zu- oder Abladungen mindestens zweimal verwogen werden, woraus die Zu- oder Abladung als Differenzgewicht errechenbar ist. Vielfach sind derartige stationäre Waagen auch nicht vor Ort, so daß zeitaufwendige Anfahrwege in Kauf genommen werden müssen. In bestimmten Fällen ist es deshalb wünschenswert, die Zu- oder Abladung direkt am Fahrzeug zu ermitteln.

Ein derartiges Wägeverfahren am Fahrzeug ist aus der EP 0 573 420 B1 bekannt. Dort wird die Last oder das Gewicht des Fahrzeugs und seiner Ladung mit Hilfe einer sogenannten Direktwägetechnik ermittelt. Dazu sind unmittelbar am starren Rahmen des Fahrzeugchassis Aufnehmer angebracht, die sich in der Nähe der Aufhängepunkte zwischen dem Chassis und den Achsen befinden. Mit diesen Aufnehmern wird die Verformung des Rahmens gemessen, der proportional der Belastung bzw. des Gewichts ist. Ein derartiges Wägeverfahren ist zwar sehr einfach ausgebildet, aber für genauere eichfähige Wägesysteme zu ungenau. Insbesondere dürfte eine genaue Messung bei schräg stehenden Fahrzeugen nur mit größerem rechnerischem Auswerteverfahren möglich sein.

Aus der DE 29 521 150 U1 ist eine Wägevorrichtung für ein Fahrzeug bekannt, bei dem zwischen den zu wiegenden Aufbauten und dem Fahrzeugchassis eine oder mehrere Wägezellen angeordnet sind, mit denen das Gewicht der Aufbauten bzw. dessen Inhalt ermittelt werden kann. Dazu muss das Fahrzeug aber waa-gerecht gerade auf einem Untergrund stehen oder es ist mit Hilfe eines Neigungssensors und Rechenschaltungen vorgesehen, den Schiefstand rechnerisch zu korrigieren. Zur horizontalen Fesselung des Aufbaus beim Schiefstand des Fahrzeugs ist zusätzlich noch vorgesehen, die Aufbauten gegenüber dem Fahrzeugchassis horizontalen Lenkern gegen eine seitliche Verschiebung zu sichern. Eine derartige Neigungskorrektur hat den Nachteil, dass auch ein Neigungssensor einen Messfehler verursacht, der über die Korrekturrechnungen das Wägeergebnis zusätzlich verfälscht. Darüber hinaus ist die horizontale Fixierung mit Hilfe der Lenker konstruktiv sehr aufwendig und es können noch zusätzliche Messfehler durch Kraftnebenschlusswirkungen eintreten.

Eine Wägevorrichtung zum Wiegen einer Ladung eines Fahrzeuges ist aus der EP-A-476778 bekannt. Darin ist eine Wägevorrichtung offenbart, bei der zwischen einem Fahrzeugrahmen und einem verwogenen Fahrzeugteil sogenannte Universalgelenke vorgesehen sind. Diese bestehen bei einer Ausführungsart aus einem Kugellager das am Fahrzeugrahmen und einem weiteren Kugellager das am verwogenen Fahrzeugteil befestigt ist und diese mittels eines Längsstabes miteinander lose verbunden sind. Durch diese Universallager wird der verwogene Fahrzeugteil hängend im Fahrzeugrahmen angeordnet und richtet sich durch die Kugellager stets lotrecht aus. Zur Ermittlung des Gewichts einer Ladung sind deshalb oberhalb und unterhalb der Kugellager jeweils ein sogenannter Lastanzeiger mit dem Längsstab verbunden, auf den sich der aufgehängte verwiegbare Fahrzeugteil abstützt. Dabei wird die Gewichtskraft offensichtlich stets lotrecht in geringförmige Krafteinleitungselemente des mit dem Stab verbundenen Lastanzeigers eingeleitet, so dass auch bei einer Fahrzeugschrägstellung die Gewichtskraft stets schwerkraftgenau erfassbar ist. Allerdings hängt bei dieser Anordnung die Messgenauigkeit der Wägeeinrichtung insbesondere von der speziellen Ausgestaltung der ringförmigen Krafteinleitungsteile und der Ausbildung des Lastanzeigers ab. Wobei insbesondere bei mechanisch aufwendigen Wägezellen mit exakten Krafteinleitungselementen oberhalb oder unterhalb der Kugellager noch zusätzlicher Einbauraum benötigt wird.

NL-A-9101201 beschreibt zwar sphärische Lagerelemente an sogenannten S-förmigen Kraftaufnehmem bzw. Wägezellen, diese weisen aber als Kraftein- und Kraftausleitungsteil spezielle Kraftrückführungselemente auf. Dabei sind insbesondere diese Kraftrückführungselemente dazu vorgesehen, die Wägezellen bzw. Kraftaufnehmer von einer exakten Krafteinleitung unabhängig zu machen und gestatten daher eine Vielzahl von Aufhängungs- und Befestigungsmöglichkeiten.

Der Erfindung liegt deshalb die Aufgabe zugrunde, eine Wägeeinrichtung der eingangs genannten Art zu schaffen, bei der der Einfluss der Schräglage des Fahrzeugs den Messfehler auf ein Minimum reduziert und dies bei einfachster Ausgestaltung.

Diese Aufgabe wird durch die im Patentanspruch 1 angegebene Erfindung gelöst. Weiterbildungen und vorteilhafte Ausführungsbeispiele der Erfindung sind in den abhängigen Ansprüchen angegeben.

Die Erfindung hat den Vorteil, daß durch die pendelnd aufgehängten Wägezellen die Gewichtskraft des Fahrzeugaufbaus die Wägezellen stets in Schwerkraftrichtung ausrichtet und dies unabhängig von der Fahrzeugneigung. Dabei ist eine Neigungskorrektur zur Feststellung des Gewichts der Aufbauten bzw. dessen Inhalts entbehrlich. Weiterhin werden in vorteilhafter

Weise durch die pendelnde Aufhängung der Wägezellen die Fahrzeugaufbauten gegenüber dem Fahrzeugrahmen vertikal und in einem vorgegebenen Bereich auch horizontal fixiert, so daß Lenker und dergleichen als Abhebesicherung und Begrenzungsmittel zur Horizontalverschiebung nicht erforderlich sind. Eine derartige pendelnde Aufhängung der Wägezellen erfaßt deshalb in vorteilhafter Weise das zu messende Gewicht auch bei Schrägstellung des Fahrzeugs kraftnebenschlußfrei, so daß damit auch eine hochgenaue eichfähige Gewichtsmessung möglich ist.

Bei einer besonderen Ausführungsform der Wägeeinrichtung mit stabförmigen rotationssymmetrischen Wägezellen ist vorteilhafterweise eine platzsparende Anordnung seitlich an den Standardrahmenelementen der Fahrzeuge möglich, da auch bei verhältnismäßig hohen Nennlasten die Wägezellen eine verhältnismäßig schlanke Bauweise aufweisen. Bei einer derartigen Ausführung kann die pendelnde Lagerung in vorteilhafter Weise auch gleich mit in den Krafteinleitungs- und Kraftausleitungselementen integriert sein oder einfach mit diesen verbunden werden.

Beim Einsatz derartiger rotationssymmetrischer stabförmiger Wägezellen ist es insbesondere vorteilhaft, daß diese gute Dauerbelastungseigenschaften besitzen, so daß diese auch im Fahrbetrieb im Kraftfluß verbleiben können und so gut reproduzierbare Meßwerte liefern. Im übrigen sind diese Wägezellen einfach und kostengünstig herstellbar und auch gegenüber dynamischen Belastungen verhältnismäßig unempfindlich.

Die Erfindung wird anhand eines Ausführungsbeispiels, das in der Zeichnung dargestellt ist, näher erläutert. Es zeigen:
- Fig. 1:: Eine Anordnung einer Wägeeinrichtung zur Aufbauverwiegung an einem Lastkraftwagen;
- Fig. 2:: ein Schnittbild der Wägezellenvorrichtung längs zur Fahrtrichtung und
- Fig. 3:: ein Schnittbild der Wägezellenvorrichtung quer zur Fahrtrichtung.

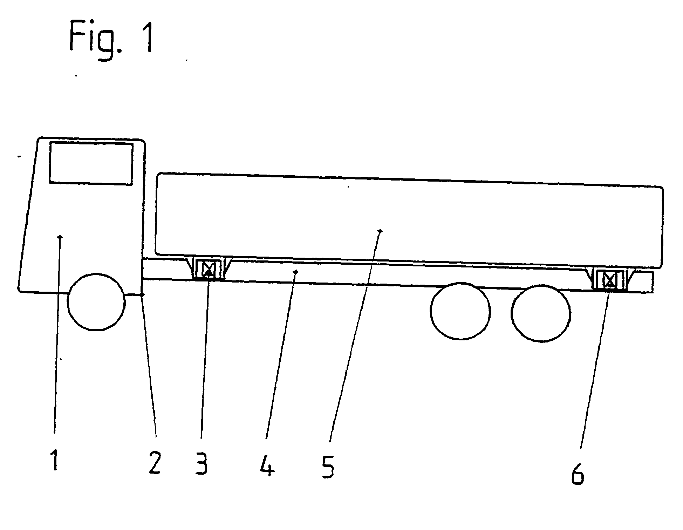

In Fig. 1 der Zeichnung ist eine Anordnung einer Wägeeinrichtung an einem Fahrzeug dargestellt, die aus vier Wägezellenvorrichtungen 3, 6 zwischen dem Fahrzeugrahmen 2 und dem Fahrzeugaufbau besteht, wobei der Aufbau pendelnd an den vier Wägezellenvorrichtungen 3, 6 aufgehängt ist.

Bei dem dargestellten Fahrzeug handelt es sich um einen Lastkraftwagen 1, dessen Fahrzeugaufbau als Ladefläche 5 ausgebildet ist. Die Wägevorrichtung kann aber auch bei schienengebundenen und anderen Fahrzeugen eingesetzt werden. Der dargestellte Lastkraftwagen 1 besitzt unter der Ladefläche 5 einen Rahmen 2, der an jeder Seite einen Längsholm 4 besitzt, an den zwei Wägezellenvorrichtungen 3, 6 angeordnet sind. Die vier Wägezellenvorrichtungen 3, 6 stützen den Fahrzeugaufbau 5 an vier Punkten gegenüber dem Fahrzeugrahmen 2 ab und fixieren diesen weitgehend in seiner vertikalen und horizontalen Lage. Dabei ist die Ladefläche 5 gegenüber dem Rahmen 2 durch die Wägezellenvorrichtungen 3, 6 lenkerartig aufgehängt, so daß ein seitlicher Verschiebebereich von ca. 10 bis 20 mm vorgesehen ist, der bei einer Schrägstellung des Fahrzeugs 1 die Wägezellenvorrichtung 3, 6 stets in die Schwerkraftrichtung ausrichtet. Dieser seitliche Verschiebebereich umfaßt alle Richtungen und ist im Wesentlichen von der axialen Länge der Wägezellenvorrichtung 3, 6 abhängig. Eine Wägezellenvorrichtung 3, 6 mit einer stabförmigen Wägezelle mit sphärischen Gelenken besitzt in der Regel eine Länge von ca. 100 bis 200 mm, so daß ein seitlicher Verschiebebereich beim Schiefstand von 10 bis 20 mm ausreicht, um stets eine senkrechte Ausrichtung in Schwerkraftrichtung zu gewährleisten.

Bei der dargestellten Wägeeinrichtung sind vier Wägezellenvorrichtungen 3, 6 an den Eckbereichen unter dem Fahrzeugaufbau 5 angeordnet, die so miteinander verschaltet sind, daß sie ein Signal liefern, das direkt der Gewichtskraft des Aufbaus 5 samt dessen Inhalts proportional ist. Die Wägeeinrichtung kann aber auch aus drei oder mehr als vier Wägezellenvorrichtungen 3, 6 bestehen.

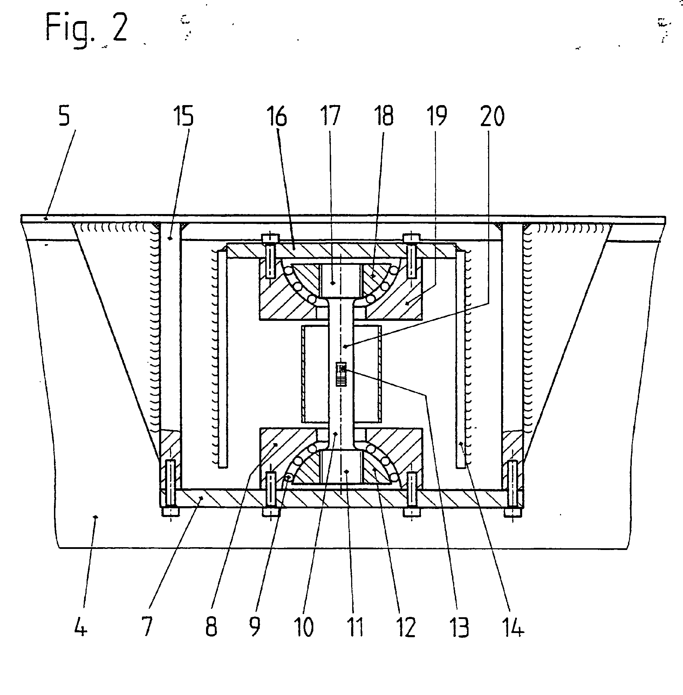

In Fig. 2 der Zeichnung ist eine Wägezellenvorrichtung 3, 6 aus seitlicher Sicht des Fahrzeugs 1 im Schnitt dargestellt. Dabei ist im oberen Bereich ein Teil des Fahrzeugaufbaus 5 ersichtlich, an dem ein nach unten gerichteter rechteckiger Umbau 15 aus flachen Blechteilen befestigt ist. Dieser Umbau 15 verfügt an seinem unteren Teil über ein horizontales Blechteil 7, das mit den vertikalen Blechteilen verbunden ist und an dem ein Gewichtsaufnehmer 10 befestigt ist.

In diesem Umbau 15 des Fahrzeugaufbaus 5 ragt seitlich ein weiterer etwas kleinerer Umbau 14 hinein, der seitlich an einem Längsholm 4 des Fahrzeugrahmens 2 befestigt ist. Dieser kleinere Umbau 14 ist v-förmig ausgebildet und nach unten offen und verfügt oben über ein horizontales Blechteil 16, an dem die obere Seite des Gewichtsaufnehmers 10 befestigt ist. Dadurch wird der Gewichtsaufnehmer 10 durch das Gewicht des Aufbaus 5 und deren Inhalts auf Zug beansprucht. Durch diese seitliche Anordnung am Längsholm 4 des Fahrzeugrahmens 2 und die Zugbeanspruchung benötigt die Wägezellenvorrichtung 3, 6 im Grunde keinen zusätzlichen Platzbedarf in vertikaler Richtung zwischen dem Aufbau 5 und dem Fahrzeugrahmen 2. Die dargestellten Umbauteile 15, 14 sind direkt am Rahmen 2 oder Aufbau 5 angeschweißt und stellen somit eine kraftschlüssige Verbindung her.

Die gesamte Wägezellenvorrichtung 3, 6 aus den Umbauteilen 15, 14, dem Gewichtsaufnehmer 10 mit dessen Anbau und Auswerteteilen kann auch als Moduleinheit vorgesehen sein und über Verbindungselemente am Fahrzeugaufbau 5 und Fahrzeugrahmen 2 befestigt werden.

Der Gewichtsaufnehmer 10 besteht im wesentlichen aus einem stabförmigen Verformungskörper 20, an dem Dehnungsmeßstreifen 13 appliziert sind und der mit Krafteinleitungs- und Kraftausleitungsteilen verbunden ist. Der Verformungskörper ist als Rundstab 20 ausgebildet, der oben und unten in ein Gewindeteil 11, 17 ausläuft. Der Verformungskörper kann aber auch quadratische, rechteckige oder davon abgewandelte Querschnittsformen aufweisen. Das Gewindeteil 11, 17 ist jeweils mit einem sphärischen nach außen gewölbten Lagerelement 12, 18 verbunden und bildet jeweils ein Kraftein- und Kraftausleitungsteil. Die sphärischen Lagerelemente 12, 18 sind in ebenfalls sphärischen Gegenlagerelementen 8, 19 angeordnet, die allerdings nach innen gewölbt sind und somit der Form der Krafteinleitungs- 12 und Ausleitungselementen 18 angepaßt sind und bilden sogenannte Axial-Gelenklager.

Zwischen den Lager- 12, 18 und Gegenlagerelementen 8, 19 sind zur Reibungsminderung Kugellager 9 vorgesehen. Zur Reibuhgsminderung sind aber auch reibungsarme Kunststoffe wie Polytetraflourethylen (PTFE) oder Schmierstoffe einsetzbar. Die Gegenlagerelemente 8, 19 sind über eine lösbare Verbindung jeweils an den horizontalen Umbauteilen 7, 16 befestigt. Durch die sphärische Ausbildung der Krafteinleitungs- 12 und -ausleitungselemente 18 wird der Gewichtsaufnehmer 10 durch die Schwerkraftwirkung des hängend angeordneten Fahrzeugaufbaus 5 vertikal ausgerichtet und dies auch bei einer Schiefstellung des Fahrzeugs 1, so daß die Gewichtsaufnehmer 10 bzw. Wägezellen stets in Schwerkraftrichtung ausgerichtet sind.

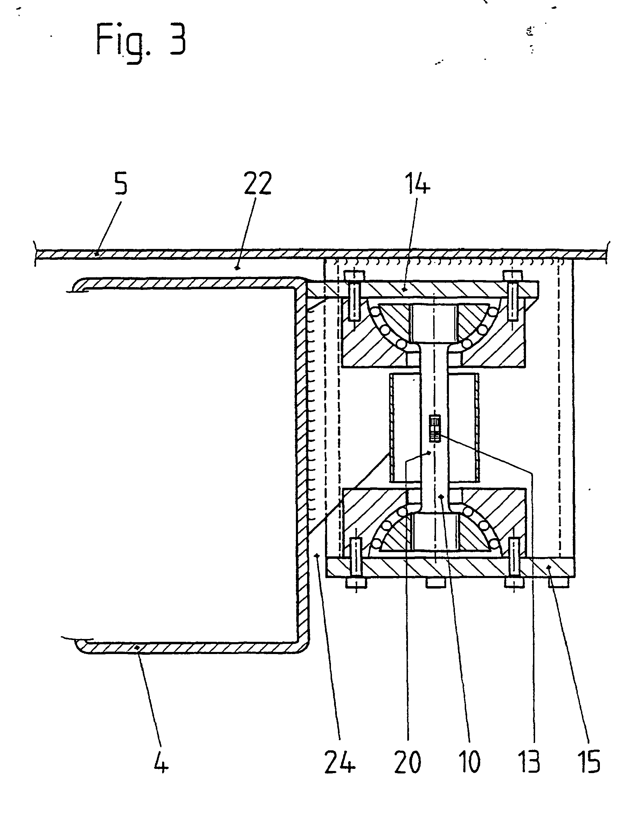

In Fig. 3 der Zeichnung ist eine Wägezellenvorrichtung 3, 6 als Schnittbild aus Fahrtrichtungsicht dargestellt. In Fig. 3 der Zeichnung sind die in Fig. 2 dargestellten gleichartigen Teile mit den selben Bezugsziffern versehen. Dabei ist der rotationssymmetrische Gewichtsaufnehmer 10 seitlich neben dem U-förmigen Längsholm 4 des Fahrzeugsrahmens 2 angeordnet und mit diesem über den kleineren rechteckigen Umbau 14 verbunden. Andererseits ist der größere Umbau 15 im oberen Bereich an dem Fahrzeugaufbau 5 befestigt. Zwischen dem Fahrzeugaufbau 5 und dem Fahrzeugrahmen 2 als auch zwischen dem Umbauteil 15, 14 ist ein vertikaler 24 und horizontaler Abstand 22 von ca. 10 bis 20 mm vorgesehen, um bei einer Schrägstellung des Fahrzeugs 1 eine vertikale Ausrichtung der Gewichtsaufnehmer 10 zu ermöglichen. Diese Abstände 24, 22 sind allerdings nur während einer Wägung notwendig. Obwohl die Gewichtsaufnehmer 10 bzw. Wägezellen auch im Fahrtzustand im Kraftfluß verbleiben können, wird der Fahrzeugaufbau 5 mindestens in einer horizontalen Lage fixiert. Dazu können nicht dargestellte, senkrecht ausgebildete konische Bolzen vorgesehen werden, die von unten durch Bohrungen des Seitenholms 4 in Bohrungen des Aufbaus 5 gesteckt werden. Eine derartige Arretierungsvorrichtung kann auch selbsttätig über einen Hydraulik- oder Pneumatikzylinder oder eine beliebige andere Antriebsart erfolgen. Dazu sind gleichzeitig elektronische Schalt- und Anzeigevorrichtungen vorgesehen, die eine Aufbauverwiegung nur ermöglichen, wenn die Arretierungsvorrichtung gelöst ist, so daß der Aufbau 5 durch die Schwerkraft kraftnebenschlußfrei in die Schwerkraftrichtung ausgerichtet ist. Andererseits wird durch eine definierte Gewichtskraftanzeige dem Fahrer angezeigt, daß der Aufbau durch die Verriegelung für den Fahrbetrieb gesichert ist.

Die Arretierungsvorrichtung kann auch mit Hydraulik- oder Pneumatikzylindern oder aufblasbaren Gummibälgen oder mit beliebigen Antrieben erfolgen, die die seitlichen horizontalen Zwischenräume 21 zwischen den Umbauteilen 15, 14 oder den Umbauteilen 15, 14 und dem Fahrzeugrahmen 2 ausfüllen oder verringern. Weiterhin kann eine Arretierung des Aufbaus 5 gegenüber dem Fahrzeugrahmen 2 auch durch Seilzugsysteme erfolgen, die zum Verwiegen des Aufbaus 5 oder der Güter gelockert werden.

Bei dem Gewichtsaufnehmer 10 wird vorteilhafterweise eine stabförmige weitgehend rotationssymmetrische Wägezelle eingesetzt, auf deren Umfang im Mittelbereich des Stabes 20 Dehnungsmeßstreifen 13 appliziert sind. Die Verformung der Wägezellen 10 erzeugen in den Dehnungsmeßstreifen 13 ein Signal, das der eingeleiteten Gewichtskraft proportional ist. Es sind aber auch andere Wägezellen einsetzbar, die so aufgehängt sind, daß der Aufbau stets in Meßrichtung ausgerichtet ist. So können zwischen den sphärischen Kraftein- 12 und Kraftausleitungselementen 18 auch rotationssymmetrische Biegering- oder Biegebalkenwägezellen angeordnet werden, mit der die Gewichtskraft des Aufbaus 5 und deren Inhalts erfaßbar ist.

Die Kraftein- 12 und Kraftaufnahmeelemente 18 müssen nicht sphärisch ausgebildet sein, sondern können auch als Kardangelenk, als Kegelspitzenlagerung, Pendelkugellager oder vergleichbarer Ausführung ausgebildet sein. Dabei muß lediglich eine weitgehend reibungsfreie Lagerung nach allen horizontalen Seiten vorgesehen werden, zwischen der die Wägezellen angeordnet sind.

Mit einer derartigen Wägeeinrichtung können alle möglichen Arten von Gütern sowie Flüssigkeiten gewogen werden, die auf oder in Fahrzeugaufbauteile verbracht werden können. Bei wechselnden Aufbauten kann auch das jeweilige Gewicht der Aufbauten mit oder ohne Inhalt bestimmt werden.

## Patentansprüche

1. Wägeeinrichtung zum Verwiegen von Gütern auf Fahrzeugen (1), insbesondere von Gütern auf Aufbauteilen (5) von Fahrzeugen (1), bei der zwischen den zu wiegenden Aufbauteilen (5) und einem Fahrzeugrahmen (2) Gewichtskraftaufnehmer (3,6) angeordnet sind, deren Signale dem Gewicht der Aufbauteile (5) sowie deren Inhalt proportional sind, wobei die Gewichtskraftaufnehmer (3,6) mit pendelnden Lagerelementen (12,18) verbunden sind und sich durch die Schwerkraft so ausrichten, dass die Gewichtskraftrichtung stets in Hauptmessrichtung verläuft, **dadurch gekennzeichnet, dass** die Gewichtskraftaufnehmer (3,6) als rotationssymmetrische stabförmige Wägezellen (10) ausgebildet sind, die aus einem axial hintereinander angeordneten Krafteinleitungsteil (12), einem Verformungskörper und einem Kraftausleitungsteil (18) bestehen, wobei der Verformungskörper als Stab (20) ausgebildet ist, auf dessen Umfang im Mittelbereich Dehnungsmessstreifen appliziert sind und der auf Zug beanspruchbar ist, und dass das Krafteinleitungs- (12) und das Kraftausleitungsteil (18) jeweils als sphärisches Lagerelement (12,18) ausgebildet ist und dass das sphärische Krafteinleitungs-(12) und Kraftausleitungsteil (18) jeweils in einem ebenfalls sphärischen Gegenlagerelement (8,19) angeordnet ist.

2. Wägeeinrichtung nach einem der vorhergehenden Ansprüche, **dadurch gekennzeichnet, dass** mindestens drei Gewichtskraftaufnehmer (10) vorgesehen sind, die zwischen den Fahrzeugaufbauteilen (5) und den Fahrzeugrahmenteilen (2) angeordnet sind.

3. Wägeeinrichtung nach einem der vorhergehenden Ansprüche, **dadurch gekennzeichnet, dass** zwischen den Rahmen- (2) und Aufbauteilen (5) Arretierungsvorrichtungen vorgesehen sind, durch die der Aufbau (5) gegenüber dem Rahmen (2) horizontal und/oder vertikal fixierbar ist.

4. Wägeeinrichtung nach einem der vorhergehenden Ansprüche, **dadurch gekennzeichnet, dass** elektronische Schalt- und/oder Anzeigemittel vorgesehen sind, die eine Wägung nur dann freigeben und anzeigen, wenn die Arretierungsvorrichtung gelöst ist und ein maximal möglicher Verschiebebereich zwischen Lastein- und Lastausleitung nicht überschritten wird.

5. Wägeeinrichtung nach einem der vorhergehenden Ansprüche, **dadurch gekennzeichnet, dass** die Gewichtskraftaufnehmer (10) zwischen zwei umeinander angeordneten Umbauteilen (15, 14) befestigt sind, wobei ein Umbauteil (15) kraftschlüssig mit dem zu wiegenden Fahrzeugaufbau (5) und der andere Umbauteil (14) kraftschlüssig mit dem Fahrzeugrahmen (2) verbunden ist.

6. Wägeeinrichtung nach einem der vorhergehenden Ansprüche, **dadurch gekennzeichnet, dass** die Umbauteile (15, 14) so ausgebildet und angeordnet sind, dass zwischen den Umbauteilen (14) der Lasteinleitungsseite und den Umbauteilen (15) der Lastausleitungsseite mindestens in vertikaler Richtung ein vorgegebener Spaltabstand vorgesehen ist

7. Wägeeinrichtung nach einem der vorhergehenden Ansprüche, **dadurch gekennzeichnet, dass** die Umbauteile (15, 14) aus drei senkrecht aufeinander stehenden und miteinander verbundenen Blechen (7, 16) bestehen und wobei die umeinander angeordneten Umbauteile (14, 15) U-förmig mit gegenüberliegenden Öffnungen ineinander greifen.

8. Wägeeinrichtung nach einem der vorhergehenden Ansprüche, **dadurch gekennzeichnet,dass** Gegenlagerelemente (8, 19) der Lagerelemente des Krafteinleitungsteils und des Kraftausleitungsteils jeweils mit einem horizontal angeordneten Bloch (7, 16) der beiden Umbauteile (14, 15) verbunden sind.

## Claims

1. Weighing device for weighing goods on vehicles (1), in particular goods on body parts (5) of vehicles (1), in which between the body parts (5) to be weighed and a vehicle frame (2) weight force sensors (3, 6) are disposed, the signals of which are proportional to the weight of the body parts (5) and the contents thereof, wherein the weight force sensors (3, 6) are connected to pendulum bearing elements (12, 18) and are aligned by gravitational force in such a way that the weight force direction extends always in principal measuring direction, **characterized in that** the weight force sensors (3, 6) take the form of rotationally symmetrical rod-shaped load cells (10), which comprise a force input part (12), a deformation body and a force output part (18) disposed axially in succession, wherein the deformation body takes the form of a rod (20), on the periphery of which in the middle region strain gauges are applied and which is loadable in tension, and that the force input part (12) and the force output part (18) each take the form of a spherical bearing element (12, 18) and that the spherical force input part (12) and force output part (18) are disposed in each case in a likewise spherical thrust bearing element (8, 19).

2. Weighing device according to one of the preceding claims, **characterized in that** at least three weight force sensors (10) are provided, which are disposed between the vehicle body parts (5) and the vehicle frame parts (2).

3. Weighing device according to one of the preceding claims, **characterized in that** between the frame parts (2) and body parts (5) locking apparatuses are provided, by means of which the body (5) is horizontally and/or vertically fixable relative to the frame (2).

4. Weighing device according to one of the preceding claims, **characterized in that** electronic switching and/or display means are provided, which enable and display a weighing operation only when the locking apparatus is released and a maximum possible displacement range between load input and load output is not exceeded.

5. Weighing device according to one of the preceding claims, **characterized in that** the weight force sensors (10) are fastened between two enclosure parts (15, 14) disposed one around the other, wherein one enclosure part (15) is connected in force-transmitting manner to the vehicle body (5) to be weighed and the other enclosure part (14) is connected in force-transmitting manner to the vehicle frame (2).

6. Weighing device according to one of the preceding claims, **characterized in that** the enclosure parts (15, 14) are designed and disposed in such a way that between the enclosure parts (14) of the load input side and the enclosure parts (15) of the load output side a defined gap clearance is provided at least in vertical direction.

7. Weighing device according to one of the preceding claims, **characterized in that** the enclosure parts (15, 14) comprise three metal sheets (7, 16), which are mutually perpendicular and connected to one another, and wherein the enclosure parts (14, 15) disposed one around the other engage one into the other in a U-shaped manner with opposing openings.

8. Weighing device according to one of the preceding claims, **characterized in that** thrust bearing elements (8, 19) of the bearing elements of the force input part and force output part are connected in each case to a horizontally disposed metal sheet (7, 16) of the two enclosure parts (14, 15).

## Revendications

1. Dispositif de pesage pour peser des objets sur des véhicules (1), en particulier des objets sur des parties de carrosserie (5) de véhicules (1), où des capteurs de charge (3, 6) sont disposés entre les parties de carrosserie (5) à peser et un châssis de véhicule (2), dont les signaux sont proportionnels au poids des parties de carrosserie (5) et à leur contenu, lesdits capteurs de charge (3, 6) étant reliés à des éléments de paliers oscillants (12, 18) et étant par la force de gravité orientés de telle manière que la direction de la force de gravité soit toujours dans la direction de mesure principale, **caractérisé en ce que** les capteurs de charge (3, 6) sont réalisés comme cellules de pesage (10) en forme de barres à symétrie de rotation, composées d'une pièce d'admission de force (12), d'un corps de déformation et d'une pièce d'échappement de force (18) disposés successivement dans le sens axial, ledit corps de déformation étant réalisé en tant que barre (20) sur le contour de laquelle des bandes de mesure de dilatation sont appliquées dans la zone centrale et qui peut être contrainte par traction, **en ce que** la pièce d'admission de force (12) et la pièce d'échappement de force (18) sont réalisées chacune en tant qu'élément de palier sphérique (12, 18), et **en ce que** la pièce d'admission de force (12) et la pièce d'échappement de force (18) sphériques sont disposées chacune dans un élément de butée de palier (8, 19) également sphérique.

2. Dispositif de pesage selon l'une des revendications précédentes, **caractérisé en ce qu'**au moins trois capteurs de charge (10) sont prévus, disposés entre les parties de carrosserie (5) de véhicule et les parties de châssis de véhicule (2).

3. Dispositif de pesage selon l'une des revendications précédentes, **caractérisé en ce que** des dispositifs de blocage sont prévus entre les parties de châssis (2) et les parties de carrosserie (5), au moyen desquels la carrosserie (5) peut être fixée horizontalement et/ou verticalement par rapport au châssis (2).

4. Dispositif de pesage selon l'une des revendications précédentes, **caractérisé en ce que** des moyens de commutation et/ou d'affichage électroniques sont prévus, lesquels ne valident et n'affichent un pesage que si le dispositif de blocage est desserré et si une plage de translation maximale admissible entre l'admission de charge et l'échappement de charge n'est pas dépassée.

5. Dispositif de pesage selon l'une des revendications précédentes, **caractérisé en ce que** les capteurs de charge (10) sont fixés entre deux pièces d'enceinte (15, 14) disposées l'une autour de l'autre, une des pièces d'enceinte (15) étant mécaniquement raccordée à la carrosserie (5) du véhicule à peser, et l'autre pièce d'enceinte (14) étant mécaniquement raccordée au châssis (2) du véhicule.

6. Dispositif de pesage selon l'une des revendications précédentes, **caractérisé en ce que** les pièces d'enceinte (15, 14) sont réalisées et disposées de manière à ménager au moins en direction verticale un écartement défini entre les pièces d'enceinte (15) du côté d'admission de charge et les pièces d'enceinte (14) du côté d'échappement de charge.

7. Dispositif de pesage selon l'une des revendications précédentes, **caractérisé en ce que** les pièces d'enceinte (15, 14) se composent de trois plaques de tôle (7, 16) disposées l'une sur l'autre dans le sens vertical et raccordées entre elles, les pièces d'enceinte (14, 15) disposées l'une autour de l'autre s'engageant l'une dans l'autre en forme de U avec des ouvertures opposées.

8. Dispositif de pesage selon l'une des revendications précédentes, **caractérisé en ce que** les éléments de butée de palier (8, 19) des éléments de palier de la pièce d'admission de force et de la pièce d'échappement de force sont raccordés chacun à une plaque de tôle (7, 16) des deux pièces d'enceinte (14, 15), disposée horizontalement.
